# EUROPEAN PATENT APPLICATION

(11) **EP 4 730 470 A1**
(43) Date of publication of application: **22.04.2026**
(21) Application number: 25159653.2
(22) Date of filing: 24.02.2025
(51) Int. Cl.: H01M 10/058, H01M 10/04, H01M 10/42, H01M 50/471

(54) **LITHIUM-ION SECONDARY BATTERY AND NEGATIVE ELECTRODE STRUCTURE**

(30) Priority: 17.10.2024 US 202418918089
(71) Applicant: CYNTEC CO., LTD., Hsinchu 30076 (TW)
(72) Inventor: Chang, Yu-Hsiu, 30076 Hsinchu (TW); Wei, Pei-I, 30076 Hsinchu (TW); Wu, Tsung-Chan, 30076 Hsinchu (TW)
(74) Representative: Straus, Alexander

(57) **Abstract**

A lithium-ion secondary battery (10) is provided in the present disclosure, including a positive electrode (PE) with a first current collector (100) and a first active material (108), a negative electrode (NE), a separator (106) between the positive electrode (PE) and the negative electrode (NE), a field electrode (FE) at one side of the negative electrode (NE) opposite to the positive electrode (PE), and a first insulating layer (110) isolated between the negative electrode (NE) and the field electrode (FE).

## Description

### Field of the Invention

The present disclosure relates generally to a secondary battery, and more specifically, to a lithium-ion secondary battery with field electrode near negative electrode for suppressing the growth of lithium dendrite.

### Background of the Invention

Lithium metal has traditionally been regarded as an ideal anode material for high energy density batteries owing to its ultra-high theoretical specific capacity, extremely low redox potential and low density. Developing lithium metal electrodes is of great significance for developing solid-state batteries. However, the safety issues caused by lithium dendrite growth during the cycling process of lithium metal batteries seriously hinder their commercial applications. Lithium dendrites are possibly formed when lithium ions are reduced in the charging process of battery. The growth of lithium dendrites will cause instability at the interface between the electrode and the electrolyte during the cycling process of the lithium-ion battery, destroying the generated solid electrolyte interface (SEI) film. Furthermore, lithium dendrites will continue to consume the electrolyte and lead to irreversible deposition of metallic lithium during the growth process, lowering the coulombic efficiency of the battery. Serious formation of lithium dendrites can even pierce the separator and cause an internal short circuit in the lithium-ion battery, causing thermal runaway of the battery and triggering a combustion explosion. Accordingly, how to suppress lithium dendrite growth and construct safe lithium metal batteries has been one of the goal for those of skilled in the art to strive for.

### Summary of the Invention

In order to suppress the growth of lithium dendrite, the present disclosure hereby provides a novel lithium-ion secondary battery, featuring an additional field electrode near negative electrode for providing an electric field to modify the distribution of cations in the reduction of negative electrode, thereby reducing the chance of dendrite formation.

One objective of present disclosure is to provide a lithium-ion secondary battery, including a positive electrode with a first current collector and a first active material on the first current collector, a negative electrode with a second current collector, a separator between the positive electrode and the negative electrode, a field electrode at one side of the negative electrode opposite to the positive electrode, and a first insulating layer isolated between the negative electrode and the field electrode.

Another objective of present disclosure is to provide a negative electrode structure for lithium-ion secondary battery, including a negative electrode, a field electrode at one side of the negative electrode, and a first insulating layer isolated between the negative electrode and the field electrode.

These and other objectives of the present disclosure will no doubt become obvious to those of ordinary skill in the art after reading the following detailed description of the preferred embodiment that is illustrated in the various figures and drawings.

### Brief Description of the Drawings

The accompanying drawings are included to provide a further understanding of the embodiments, and are incorporated in and constitute a part of this specification. The drawings illustrate some of the embodiments and, together with the description, serve to explain their principles. In the drawings:
FIG. 1 is a schematic cross-section of a lithium-ion secondary battery in accordance with one embodiment of present disclosure;
FIG. 2 is a schematic cross-section of a lithium-ion secondary battery in accordance with another embodiment of present disclosure;
FIG. 3 is a linear perspective drawing of a lithium-ion secondary battery in accordance with another embodiment of present disclosure; and
FIG. 4 is a comparison graph of the ratio of remaining capacity to the cycle number of lithium-ion secondary batteries of the present invention and conventional skill.

It should be noted that all the figures are diagrammatic. Relative dimensions and proportions of parts of the drawings have been shown exaggerated or reduced in size, for the sake of clarity and convenience in the drawings. The same reference signs are generally used to refer to corresponding or similar features in modified and different embodiments.

### Detailed Description

Reference will now be made in detail to exemplary embodiments of the present disclosure, which are illustrated in the accompanying drawings in order to understand and implement the present disclosure and to realize the technical effect. It can be understood that the following description has been made only by way of example, but not to limit the present disclosure. Various embodiments of the present disclosure and various features in the embodiments that are not conflicted with each other can be combined and rearranged in various ways. Without departing from the spirit and scope of the present disclosure, modifications, equivalents, or improvements to the present disclosure are understandable to those skilled in the art and are intended to be encompassed within the scope of the present disclosure.

It should be readily understood that the meaning of "on," "above," and "over" in the present disclosure should be interpreted in the broadest manner such that "on" not only means "directly on" something but also includes the meaning of "on" something with an intermediate feature or a layer therebetween, and that "above" or "over" not only means the meaning of "above" or "over" something but can also include the meaning it is "above" or "over" something with no intermediate feature or layer therebetween (i.e., directly on something). In addition, spatially relative terms (e.g., "beneath," "below," "lower," "above," "upper" and the like) may be used herein for ease of description to describe one element or a relationship between a feature and another element or feature as illustrated in the figures.

As used herein, the term "layer" refers to a material portion including a region with a thickness. A layer can extend over the entirety of an underlying or overlying structure, or may have an extent less than the extent of an underlying or overlying structure. Further, a layer can be a region of a homogeneous or inhomogeneous continuous structure that has a thickness less than the thickness of the continuous structure. For example, a layer can be located between any pair of horizontal planes between, or at, a top surface and a bottom surface of the continuous structure. A layer can extend horizontally, vertically, and/or along a tapered surface. A substrate can be a layer, can include one or more layers therein, and/or can have one or more layer thereupon, thereabove, and/or therebelow. A layer can include multiple layers. For example, an interconnect layer can include one or more conductor and contact layers (in which contacts, interconnect lines, and/or through holes are formed) and one or more dielectric layers.

In general, terminology may be understood at least in part from usage in context. For example, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," again, may be understood to convey a singular usage or to convey a plural usage, depending at least in part upon context. Additionally, the term "based on" may be understood as not necessarily intended to convey an exclusive set of factors, but may allow for the presence of other factors not necessarily expressly described, again depending at least in part on the context.

It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

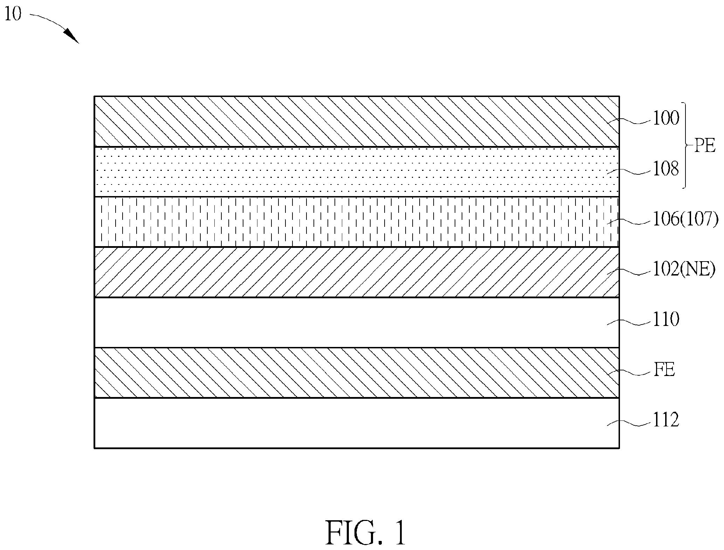

Please refer to FIG. 1, which is a schematic cross-section of a secondary battery in accordance with one embodiment of the present disclosure. The secondary battery 10 of the present disclosure generally includes three electrodes, namely a positive electrode PE, a negative electrode NE and a field electrode FE, respectively, which are essential parts of batteries that can consist of a variety of materials (chemicals) depending on the type of battery, for example, a lithium-ion battery in the present disclosure.

Among them, the positive electrode PE is composed of a first current collector 100 and a first active material 108. The positive electrode PE is the electrode with a higher potential than a corresponding negative electrode, for example, a negative electrode NE. During discharge, the positive electrode PE functions as a cathode, meaning the electrons flow from the electrical circuit through the positive electrode PE into the battery cell. The reduction half- reaction takes place with the electrons arriving from the wire connected to the positive electrode PE. Correspondingly, cations (e.g., Li⁺ ions) are extracted from the negative electrode NE in this process and intercalated into the first active material 108 (e.g., LiCoO₂) of the positive electrode PE through a separator 106 and an electrolyte 107. The main function of first current collector 100 is to collect the current generated by the first active material 108 in this process to form a larger current for external output. To fulfill the purpose, the first current collector 100 needs to be coated and fully contacted with the first active material 108, and its internal resistance should be as small as possible. The first active material 108 is the key to store and deliver electrical energy by facilitating the reversible movement of cations between electrodes and electrolyte and maintaining structural stability during charge-discharge cycles of the battery. In a lithium-ion battery system, the material of first current collector 100 may be selected from aluminum (Al) mesh or foil, nickel (Ni) mesh or foil, and porous carbon paper made up of nanofiber, nanotube, fiber or graphene. For example, an aluminum foil is selected in the embodiment of present disclosure. The material of first active material 108 may be selected from lithium cobalt oxide (LiCoO₂), lithium nickel oxide (LiNiO₂), lithium manganese oxide (LiMnO₂), lithium nickel manganese oxide (LiNiₓMn_{y}O₂), lithium nickel cobalt manganese oxide (LiNiₓMn_{y}Co_{z}O₂) and lithium nickel cobalt aluminum oxide (LiNiₓAl_{y}Co_{z}O₂).

On the other hand, the negative electrode NE is composed solely of a second current collector 102 in this embodiment. The negative electrode NE is the electrode with a lower potential than the corresponding positive electrode PE. During discharge, the negative electrode NE functions as an anode, meaning the current flows from the electrical circuit through the negative electrode NE into the battery cell. The oxidation half-reaction at the negative electrode NE produces positively charged cations (e.g., Li⁺ ions) and negatively charged electrons (e⁻) in the process. The cations move through the electrolyte 107 toward the positive electrode PE, where they recombine with the first active material 108 in the aforementioned reduction half-reaction. Namely, the main function of negative electrode NE is to provide cations for intercalating into the first active material 108 of positive electrode PE. Please note that, since there is no active material on the second current collector 102 in this embodiment, the second current collector 102 in this embodiment needs to function as an active material for the negative electrode NE at the same time in the redox process above. To fulfill this purpose, the second current collector 102 needs vacancies for retaining corresponding cations. In a lithium-ion battery system, the material of second current collector 102 may be selected from graphite, soft carbon, hard carbon, mesocarbon microbead (MCMB), carbon fiber, carbon nanotube, silicon, silicon-oxygen compound, silicon-carbon composite, silicon alloy, tin, tin-oxygen compound, lithium titanate, lithium, lithium-carbon composite and lithium alloy.

Refer still to FIG. 1. A separator 106 and an electrolyte 107 are provided between the positive electrode PE and the negative electrode NE. The primary function of separator 106 in the embodiment is to electrically insulate the positive electrode PE and the negative electrode NE from each other. This prevents direct electrical contact between the two electrodes, which could otherwise cause a short circuit and potentially lead to battery failure or safety hazards. In addition, the separator 106 may be porous to allow ion conduction. This enables the flow of ions passing between the positive electrode PE and the negative electrode NE during charge and discharge cycles, which is essential for the battery's operation. The separator 106 may also provide mechanical support and helps maintain the physical integrity of the battery. It keeps the two electrodes apart and ensures that the battery structure remains stable during operation and mechanical stress. In the present disclosure, the material of separator 106 may be selected from polyethylene terephthalate (PET), polyvinylidene fluoride (PVDF), polyamides (Nylons), polyurethanes, polycarbonates, polyesters, polyetheretherketones (PEEK), polyethersulfones (PES), polyimides (PI), polyamide-imides, polyethers, polyoxymethylene, polybutylene terephthalate, polyethylenenaphthenate, polybutene, acrylonitrile-butadiene styrene copolymers (ABS), polystyrene copolymers, polymethylmethacrylate (PMMA), polyvinyl chloride (PVC), polysiloxane polymers, polybenzimidazole (PBI), polybenzoxazole (PBO), polyphenylenes, polyarylene ether ketones, polyperfluorocyclobutanes, polytetrafluoroethylene (PTFE), polyvinylidene fluoride copolymers or terpolymers, polyvinylidene chloride, polyvinylfluoride, liquid crystalline polymers, poly(p-hydroxybenzoic acid), polyaramides and polyphenylene oxide.

With respect to electrolyte 107, the electrolyte 107 serves as the chemical medium through which cations migrate during the charge and discharge cycles, responsible for facilitating the reversible movement of cations between the positive electrode PE and the negative electrode NE. The electrolyte 107 participates in the electrochemical reactions at the two electrodes, and it should be chemically stable and compatible with the electrode materials to ensure proper battery function and longevity. The composition and properties of the electrolyte 107 affect the overall performance, efficiency, and safety of the battery. Factors such as ionic conductivity, stability, and temperature tolerance are critical for optimal battery function. In a lithium-ion battery system, the material of electrolyte 107 may be carbonate ester solvent with lithium salt, ex. LiPF₆, Li₂SO₄, LiFSI, LiBF₄ or LiClO₄.

Refer still to FIG. 1. A feature of the present disclosure is an additional field electrode FE provided at one side of the negative electrode NE opposite to the positive electrode PE. The electrolyte 107 is separated from the field electrode FE. A first insulating layer 110 and a second insulating layer 112 are provided respectively at two sides of the field electrode FE. The first insulating layer 110 is intermediate between the field electrode FE and the negative electrode NE for electrical isolation. In the present disclosure, the field electrode FE can generate an external electric field to suppress the growth of lithium dendrite in charge process. When the electric field is applied, it can enhance the movement of cations through the electrolyte 107 and towards the surface of negative electrode NE, encouraging the cations to deposit more evenly across the negative electrode NE, thereby reducing the likelihood of localized high-current densities that can lead to dendrite formation. Furthermore, by applying an electric field, the energy landscape of the electrode surface can be modified. This modification can increase the energy barrier for nucleation of dendrites, making it more difficult for dendrite crystals to start growing in localized regions. Besides, the electric field can influence the kinetics of the electrochemical reactions occurring at the negative electrode NE. By optimizing the reduction reaction conditions at the negative electrode NE, the field can help in achieving a smoother and more controlled deposition process. The material of field electrode FE in the present disclosure may be, but is not limited to, any electrical conducting materials, for example, aluminum (Al), copper (Cu), nickel (Ni) or titanium (Ti). The material of first insulating layer 110 and second insulating layer 112 may be, but is not limited to, any material with good electrical insulation, for example, polyimide (PI), polyethylene (PE), polypropylene (PP) or Epoxy resin. In some embodiment, the negative electrode NE and the field electrode FE may be considered collectively as a negative electrode structure for secondary battery.

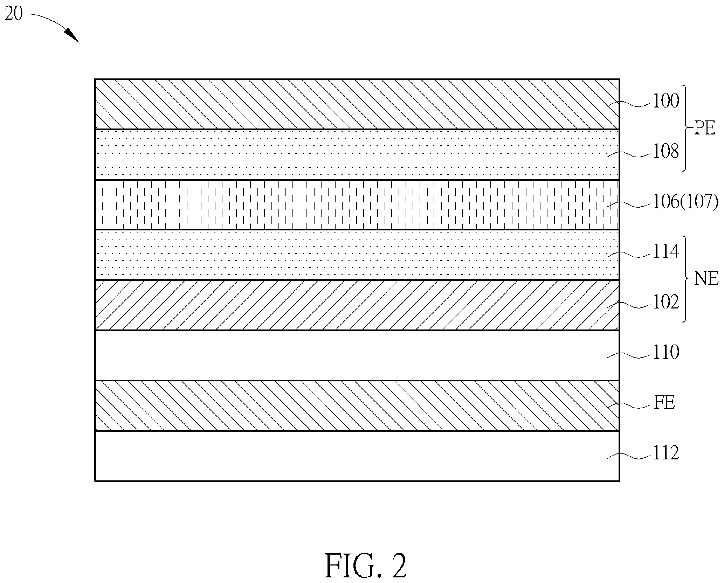

Please refer now to FIG. 2, which is a schematic cross-section of a lithium-ion secondary battery 20 in accordance with another embodiment of present disclosure. The embodiment of FIG. 2 is much the same as the aforementioned embodiment of FIG. 1, with difference that a second active material 114 is provided on the second current collector 102 of the negative electrode NE. The second current collector 102 in this embodiment functions purely as a collector for collecting the current generated by the second active material 114. The second current collector 102 needs to be coated and fully contacted with the second active material 114, and its internal resistance should be as small as possible. In a lithium-ion battery system, the material of second current collector 100 may be selected from copper (Cu), titanium (Ti) and nickel (Ni). With respect to the second active material 114, the second active material 114 in this embodiment needs to provide vacancies for retaining corresponding cations. In a lithium-ion battery system, the material of second active material 114 may be selected from graphite, soft carbon, hard carbon, mesocarbon microbead (MCMB), carbon fiber, carbon nanotube, silicon, silicon-oxygen compound, silicon-carbon composite, silicon alloy, tin, tin-oxygen compound, lithium titanate, lithium, lithium-carbon composite and lithium alloy. The positions and materials of other elements such as the positive electrode PE, the second current collector 102, the separator 106, the electrolyte 107, the first insulating layer 110, the second insulating layer 112 and the field electrode FE in FIG.2 are the same as those in the embodiment illustrated in FIG. 1. Please refer to the embodiment in FIG. 1 for detailed description.

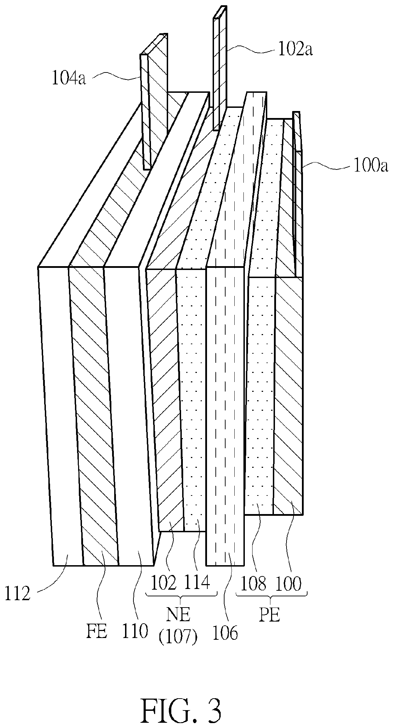

Please refer now to FIG. 3, which is a linear perspective drawing of the lithium-ion secondary battery 20 in accordance with the embodiment in FIG. 2 of present disclosure. With respect to the three electrodes PE, NE and FE of the present disclosure, tab leads 100a, 102a and 104a are provided respectively on the three electrodes PE, NE and FE. More specifically, the tab lead 100a extends upwardly from the first current collector 100 of positive electrode PE. The tab lead 102a extends upwardly from the second current collector 102 of negative electrode NE. The tab lead 104a extends upwardly from the field electrode FE. The tab leads 100a, 102a and 104a play a crucial role in connecting the internal electrodes PE, NE and FE of the battery to the external circuitry, for example, battery terminals. They ensure that the electrical current generated by the battery can flow to and from the external circuits of the device or system. Tab leads 100a, 102a and 104a may also provide mechanical stability to the battery's internal components by connecting them securely to the outer battery terminals. This helps in maintaining the structural integrity of the battery during operation and handling.

Refer still to FIG. 3. It should be known that the overlapping area of the separator 106 should be larger than the one of the first active material 108 and second active material 114 at two sides in order to provide complete electrical isolation therebetween. Similarly, the overlapping area of the field electrode FE (including the first and second insulating layers 110, 112 at two sides) should be larger than the one of adjacent second current collector 102 in order to provide complete electrical isolation therebetween and provide complete electric field distribution for suppressing the growth of lithium dendrite in charge process.

The lithium-ion secondary battery 10 shown in FIG. 1 can also be equipped with tab leads 100a, 102a and 104a provided respectively on the three electrodes PE, NE and FE, the positions of the tab leads 100a, 102a and 104a are the same as those shown in FIG. 3. Therefore, the drawing is omitted.

It should be obvious to those of skilled in the art that the aforementioned structure and components of second battery may be manufactured, assembled, contained in various forms and configurations, each tailored to specific applications, requirements or designs, for example, in a form of cylindrical cell, prismatic cell, pouch cell, button cell, square cell, flexible battery or custom shaped cell, with container like metal cans, plastic containers, custom enclosures. The choice of battery type and container depends on the specific requirements of the application, including space constraints, energy density, weight, and thermal management needs. Since these components are conventional to those of skilled in the art and not key features of the present disclosure, relevant detailed description will be herein omitted without obscuring the subject and technical features of the present disclosure.

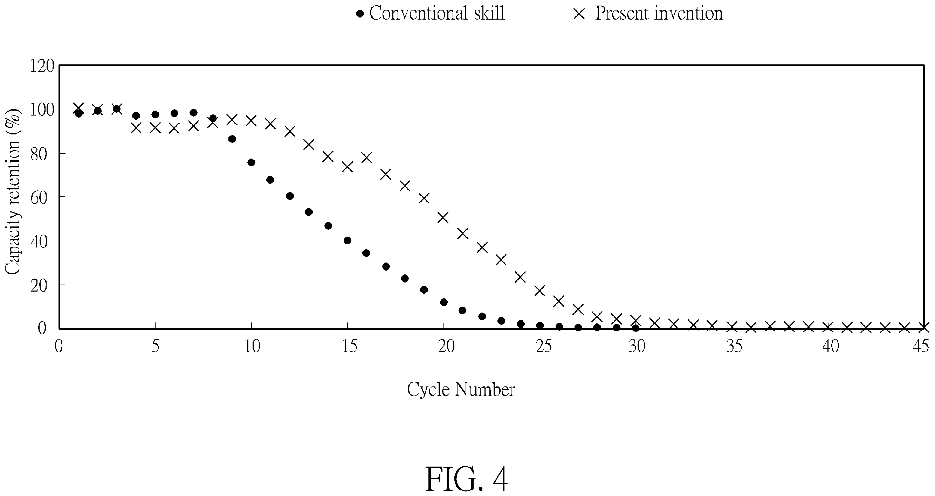

Please refer now to FIG. 4, which is a comparison graph of the ratio of remaining capacity to the cycle time of lithium-ion secondary batteries of the present invention and conventional skill. Take the negative electrode structure in the lithium-ion secondary battery in FIG. 2 of the present invention as an example, the second active material 114 of the negative electrode NE is lithium metal with a thickness of 25 µm, the second current collector 102 is copper metal with a thickness of 8 µm, the first insulating layer 110 is made of polyimide with a thickness of 60 µm, the field electrode FE is made of copper metal with a thickness of 8 µm, the first active material 108 of positive electrode PE is made of lithium cobalt manganese oxide, and the electrolyte uses carbonate electrolyte. The charging method is conducted with constant voltage (5V) charging to the battery voltage (4.2V), in which the field electrode FE provides a potential difference of 5V between the positive electrode. The average charging rate is 0.4C (representing 0.4 times the total capacity in 1 hour). Each charging and discharging operation is considered as a cycle. As can be seen from the figure, compared with the conventional skill without the additional field electrode, the present invention uses the field electrode FE to control the lithium ion concentration and charge distribution on the surface of lithium metal, increasing the probability of lithium ion reduction reaction, and reducing the chance of lithium metal to react with the electrolyte and forming dendrites, thereby reducing the loss ratio of the lithium ions. When the battery capacity declines to 60%, the cycle number of the present invention can reach 19 times, while the conventional skill only has 12 times, which significantly and effectively reduces the loss of lithium ions during the charge and discharge cycle.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A lithium-ion secondary battery (10, 20), comprising:
a positive electrode (PE), comprising a first current collector (100) and a first active material (108) on said first current collector (100);
a negative electrode (NE), comprising a second current collector (102);
a separator (106), between said positive electrode (PE) and said negative electrode (NE);
a field electrode (FE), at one side of said negative electrode (NE) opposite to said positive electrode (PE); and
a first insulating layer (110), isolated between said negative electrode (NE) and said field electrode (FE).

2. The lithium-ion secondary battery of claim 1, further comprising a second active material (114) on a side of said second current collector (102) opposite to said field electrode (FE).

3. The lithium-ion secondary battery of claim 2, wherein a material of said second active material (114) is selected from graphite, soft carbon, hard carbon, mesocarbon microbead (MCMB), carbon fiber, carbon nanotube, silicon, silicon-oxygen compound, silicon-carbon composite, silicon alloy, tin, tin-oxygen compound, lithium titanate, lithium, lithium-carbon composite and lithium alloy.

4. The lithium-ion secondary battery of any one of claims 1 to 3, wherein a material of said first active material (108) is selected from lithium cobalt oxide, lithium nickel oxide, lithium manganese oxide, lithium nickel manganese oxide, lithium nickel cobalt manganese oxide and lithium nickel cobalt aluminum oxide.

5. The lithium-ion secondary battery of any one of claims 1 to 4, wherein a material of said first current collector (100) is selected from aluminum mesh, nickel mesh and porous carbon paper made up of nanofiber, nanotube, fiber or graphene.

6. The lithium-ion secondary battery of any one of claims 1 to 5, wherein a material of said second current collector (102) is selected from copper, titanium and nickel.

7. The lithium-ion secondary battery of any one of claims 1 to 6, wherein a material of said separator (106) is selected from polyethylene terephthalate (PET), polyvinylidene fluoride (PVDF), polyamides (Nylons), polyurethanes, polycarbonates, polyesters, polyetheretherketones (PEEK), polyethersulfones (PES), polyimides (PI), polyamide-imides, polyethers, polyoxymethylene, polybutylene terephthalate, polyethylenenaphthenate, polybutene, acrylonitrile-butadiene styrene copolymers (ABS), polystyrene copolymers, polymethylmethacrylate (PMMA), polyvinyl chloride (PVC), polysiloxane polymers, polybenzimidazole (PBI), polybenzoxazole (PBO), polyphenylenes, polyarylene ether ketones, polyperfluorocyclobutanes, polytetrafluoroethylene (PTFE), polyvinylidene fluoride copolymers or terpolymers, polyvinylidene chloride, polyvinylfluoride, liquid crystalline polymers, poly(p-hydroxybenzoic acid), polyaramides and polyphenylene oxide.

8. The lithium-ion secondary battery of any one of claims 1 to 7, further comprising electrolyte (107) in said lithium-ion secondary battery (10, 20), and said electrolyte (107) is separated from said field electrode (FE).

9. The lithium-ion secondary battery of claim 8, wherein a material of said electrolyte (107) comprises carbonate ester solvent with lithium salt.

10. The lithium-ion secondary battery of any one of claims 1 to 9, further comprising a second insulating layer (112) at a side of said field electrode (FE) opposite to said first insulating layer (110).

11. A negative electrode structure for lithium-ion secondary battery, comprising:
a negative electrode (NE), comprising a current collector (100);
a field electrode (FE), at one side of said negative electrode (NE); and
a first insulating layer (110), isolated between said negative electrode (NE) and said field electrode (FE).

12. The negative electrode structure for lithium-ion secondary battery of claim 11, further comprising an active material (108) on a side of said current collector (100) opposite to said field electrode (FE).

13. The negative electrode structure for lithium-ion secondary battery of claim 12, wherein a material of said active material (108) is selected from graphite, soft carbon, hard carbon, mesocarbon microbead (MCMB), carbon fiber, carbon nanotube, silicon, silicon-oxygen compound, silicon-carbon composite, silicon alloy, tin, tin-oxygen compound, lithium titanate, lithium, lithium-carbon composite and lithium alloy.

14. The negative electrode structure for lithium-ion secondary battery of any one of claims 11 to 13, wherein a material of said current collector (100) is selected from copper, titanium and nickel.

15. The negative electrode structure for lithium-ion secondary battery of any one of claims 11 to 14, further comprising a second insulating layer (112) at a side of said field electrode (FE) opposite to said first insulating layer (110).
